# EUROPEAN PATENT APPLICATION

(11) **EP 4 640 422 A1**
(43) Date of publication of application: **29.10.2025**
(21) Application number: 23907150.9
(22) Date of filing: 21.12.2023
(51) Int. Cl.: B32B 1/00, B21C 37/00, B22D 19/00

(54) **CLAD MATERIAL**

(30) Priority: 21.12.2022 JP 2022204470
(71) Applicant: NHK Spring Co., Ltd., Yokohama-shi, Kanagawa 236-0004 (JP)
(72) Inventor: KUMAI, Shintaro, Yokohama-shi, Kanagawa 236-0004 (JP); SUZUKI, Takeshi, Yokohama-shi, Kanagawa 236-0004 (JP); HOSOYA, Masahiro, Yokohama-shi, Kanagawa 236-0004 (JP); TAKAHASHI, Keita, Yokohama-shi, Kanagawa 236-0004 (JP); MINO, Yoshinobu, Yokohama-shi, Kanagawa 236-0004 (JP); OSAKO, Shohei, Yokohama-shi, Kanagawa 236-0004 (JP); YAMADA, Kosuke, Yokohama-shi, Kanagawa 236-0004 (JP)
(74) Representative: Hoffmann Eitle
(86) International application number: PCT/JP2023/046004
(87) International publication number: WO 2024/135790

(57) **Abstract**

A clad according to the present invention includes: a core; a skin covering the core; and a mixed layer formed between the core and the skin, the mixed layer containing a mixture of a material of the core and a material of the skin, in which the mixed layer has a thickness of 1.0 µm or less.

## Description

### Field

The present invention relates to a clad.

### Background

Conventionally, in view of the requirement for weight reduction and high functionality of members in general industrial fields, attempts have been made for weight reduction and high functionality of members for processing from various viewpoints. However, when required characteristics are simultaneously satisfied, each characteristic may be in a trade-off relationship in a single material. In order to satisfy required characteristics difficult to achieve in such a single material, a technique of producing a member for processing by combining two or more types of materials has been spreading. For example, Patent Literature 1 and Patent Literature 2 describe a wire rod (hereinafter, also referred to as a clad) including a core and a skin covering the surface of the core.

### Citation List

### Patent Literature

Patent Literature 1: Japanese Unexamined Patent Application Publication No. 2009-129550
Patent Literature 2: Japanese Examined Patent Application Publication No. H07-91627

### Summary

### Technical Problem

Meanwhile, as a method of coating the outer circumference of a metal core wire with different or the same type of metal to form a composite, extrusion (rolling) coating, tape cladding, hot-dip coating, and powder pressing are widely known. Because heating is required at the time of joining in any manufacturing method, it is considered that an intermetallic compound is formed at the joining interface. Because such an intermetallic compound is very brittle as compared with the base material (here, the metal core wire), the joining strength is unlikely to be secured. For this case, Patent Literature 2 describes an attempt to solve such a problem, but due to a time lag between the formation (joining) of the skin under a high temperature and the start of cooling in the manufacturing process, an intermetallic compound is likely to be formed at the joining interface.

The present invention has been made in view of the above drawbacks, and an object of the present invention is to provide a clad including a core and a skin that are firmly joined.

### Solution to Problem

To solve the above-described problem and achieve the object, a clad according to the present invention includes: a core; a skin covering the core; and a mixed layer formed between the core and the skin, the mixed layer containing a mixture of a material of the core and a material of the skin, wherein the mixed layer has a thickness of 1.0 µm or less.

Moreover, in the above-described clad according to the present invention, the mixed layer has a thickness of 0.5 µm or less.

Moreover, in the above-described clad according to the present invention, the skin has a thickness thicker than the thickness of the mixed layer.

Moreover, in the above-described clad according to the present invention, the skin has a thickness of 0.1 mm or more and 1.0 mm or less.

Moreover, in the above-described clad according to the present invention, the core is made of copper or a copper alloy, and the skin is made of aluminum or an aluminum alloy.

### Advantageous Effects of Invention

According to the present invention, an effect is exerted in that a core and a skin re firmly joined in a clad.

### Brief Description of Drawings

[FIG. 1] FIG. 1 is a perspective view illustrating the configuration of a clad according to an embodiment of the present invention.
[FIG. 2] FIG. 2 is a sectional view taken along line A-A illustrated in FIG. 1.
[FIG. 3] FIG. 3 is a flowchart illustrating a method of manufacturing the clad according to the embodiment of the present invention.
[FIG. 4] FIG. 4 is a perspective view illustrating the configuration of a manufacturing apparatus for the clad according to the embodiment of the present invention.
[FIG. 5] FIG. 5 is a sectional view illustrating the configuration of the manufacturing apparatus for the clad according to the embodiment of the present invention.
[FIG. 6] FIG. 6 is a sectional view of the manufacturing apparatus for the clad corresponding to line Q-Q illustrated in FIG. 5.
[FIG. 7] FIG. 7 is a secondary electron image including a region of the clad according to the embodiment of the present invention subjected to quantitative analysis with an electron probe micro analyzer (EPMA).
[FIG. 8] FIG. 8 is a graph illustrating a composition ratio in the arrow direction starting from Point B₁ illustrated in FIG. 7.
[FIG. 9] FIG. 9 is a secondary electron image including a region of a conventional clad subjected to quantitative analysis with the electron probe microanalyzer (EPMA).
[FIG. 10] FIG. 10 is a graph illustrating a composition ratio in the arrow direction starting from Point B₂ illustrated in FIG. 9.
[FIG. 11] FIG. 11 is a sectional view for explaining the configuration of a main part of a producing apparatus for a clad and the configuration of a wire rod according to a first modification of the embodiment of the present invention.
[FIG. 12] FIG. 12 is a view for explaining an exemplary processing on a clad according to a second modification of the embodiment of the present invention.
[FIG. 13] FIG. 13 is a sectional view taken along line B-B illustrated in FIG. 12.

### Description of Embodiments

Hereinafter, embodiments of the present invention will be described in detail with reference to the drawings. Note that the present invention is not limited to the following embodiments. Further, each drawing referred to in the following description merely schematically illustrates a shape, size, and positional relationship to an extent that the content of the present invention can be understood. That is, the present invention is not limited only to the shape, size, and positional relationship illustrated in each drawing.

### (Embodiments)

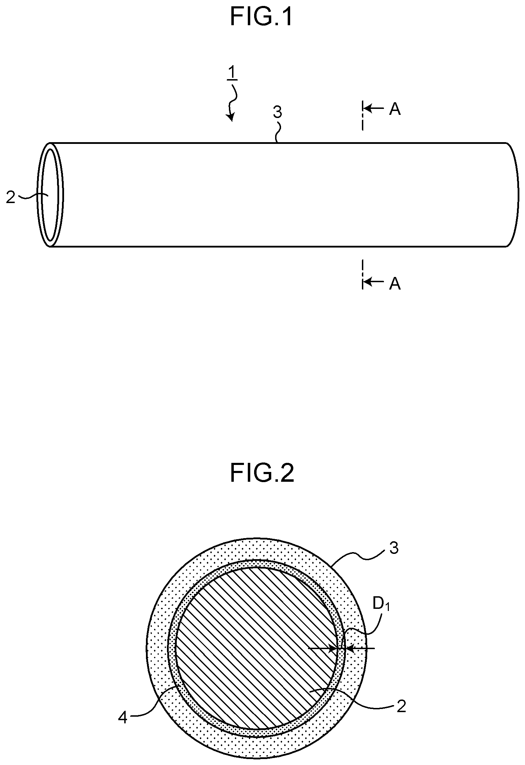

FIG. 1 is a perspective view illustrating the configuration of a clad according to an embodiment of the present invention. FIG. 2 is a sectional view taken along line A-A illustrated in FIG. 1. A clad 1 includes a core 2, a skin 3 covering the outer circumference of the core 2, and a mixed layer 4 that is provided between the core 2 and the skin 3 and contains a mixture of a material of the core 2 and a material of the skin 3.

The core 2 is a columnar member formed using copper or a copper alloy. Here, the copper alloy is an alloy containing copper as a main component.

The clad 1 is used as, for example, a conductive member for an electric wire, but is not limited to this application.

The skin 3 is a cylindrical member formed using aluminum or an aluminum alloy. The skin 3 is thicker than the mixed layer 4. The skin 3 has, for example, a thickness of 0.1 mm or more and 1.0 mm or less. In this case, the "thickness" is a distance in the radial direction of the clad 1, and corresponds to the distance from one end to the other end in a direction orthogonal to the longitudinal direction of the clad 1. Note that in a case where targets are intermittently present in the radial direction, one length of the targets or the average value of the lengths of the targets is defined as the thickness. Specifically, in a case where two skins 3 are intermittently present in the radial direction with respect to the core 2 in the cross section of the clad 1, the length of one skin 3 or the average value of the lengths of the two skins 3 is defined as the thickness.

The mixed layer 4 is generated at the joining interface between the core 2 and the skin 3 during heat treatment in the production of the clad 1, and contains the mixture of the material of the core 2 and the material of the skin 3. The mixed layer 4 has a thickness D₁ of 1 µm or less, and more preferably 0.5 µm or less. Note that the mixed layer 4 may contain an intermetallic compound formed by the heat treatment in some cases. Here, as the thickness D₁ of the mixed layer 4 is thinner, the formation of the intermetallic compound can be prevented. For example, when the thickness D₁ exceeds 1 µm, the formation amount of the intermetallic compound increases, so that the joining strength is unlikely to be secured.

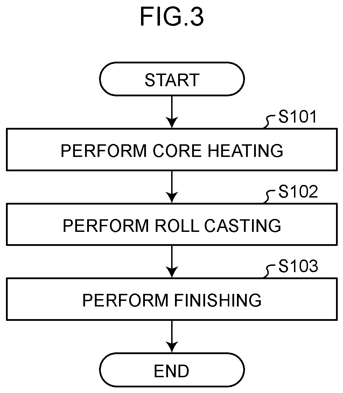

Next, a method of producing the clad 1 will be described. FIG. 3 is a flowchart illustrating a method of manufacturing a clad according to the first embodiment of the present invention. A core 2 is prepared, and the core 2 is heated (Step S101: core heating step). In the core heating, the core 2 is heated to a temperature at which the core 2 and a skin 3 can be sufficiently joined. The heating temperature is, for example, 400°C when copper is used as the core 2. As the core heating, for example, a known technique such as atmosphere furnace heating, high frequency induction heating, resistance heating, or infrared heating can be used.

After heating the core 2, a formed product with the core 2 covered with the skin 3 is produced by roll casting (Step S102: roll casting step). Note that the roll casting will be described later.

After making the formed product, the formed product is subjected to finishing such as burr removal to produce a clad 1 (Step S103). The finishing includes drawing for achieving a desired diameter, peeling, cutting with a preset length, surface finishing such as polishing, for example.

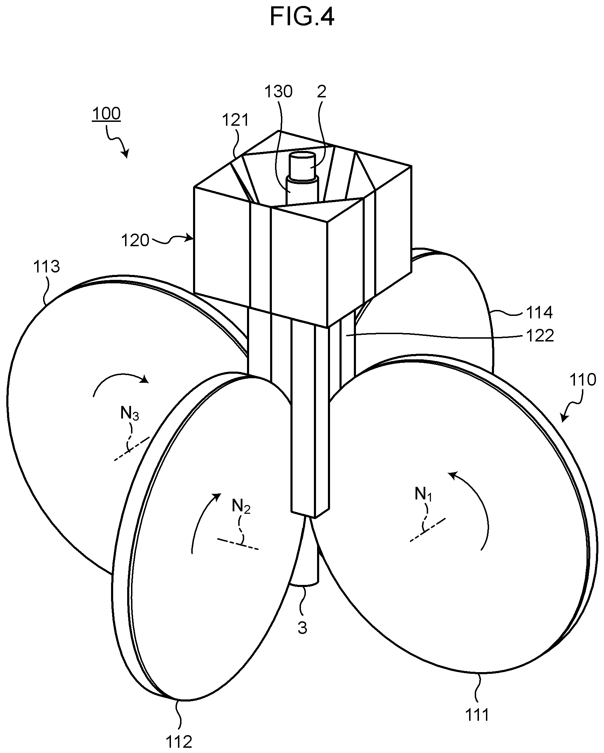

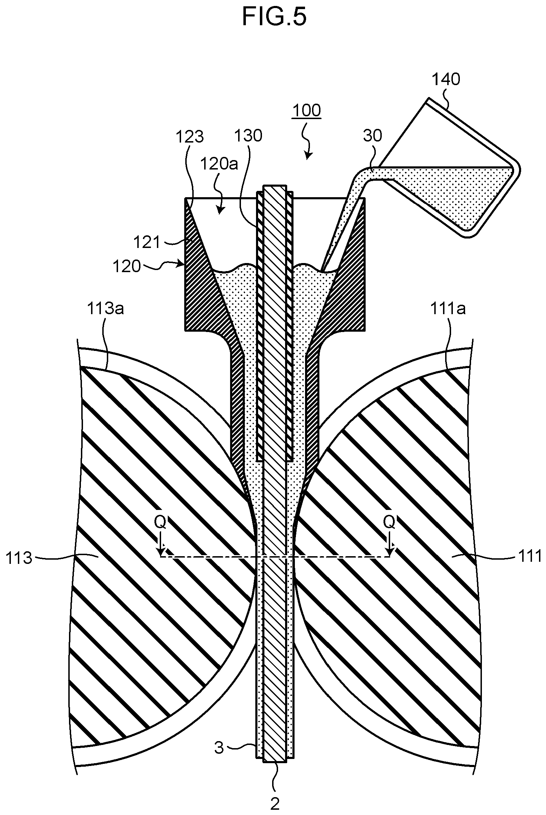

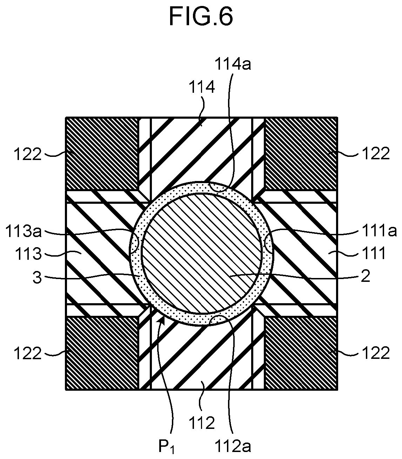

Next, the roll casting in Step S102 will be described with reference to FIGS. 4 to 6. FIG. 4 is a perspective view illustrating the configuration of a manufacturing apparatus for the clad according to the embodiment of the present invention. FIG. 5 is a sectional view illustrating the configuration of the manufacturing apparatus for the clad according to the embodiment of the present invention. FIG. 6 is a sectional view of the manufacturing apparatus for the clad corresponding to line Q-Q illustrated in FIG. 5.

A manufacturing apparatus 100 illustrated in FIGS. 4 to 6 is an apparatus used for the roll casting. The manufacturing apparatus 100 includes a roll member 110, a guide member 120, and a protection pipe 130.

The roll member 110 includes a first roll 111, a second roll 112, a third roll 113, and a fourth roll 114. The first to fourth rolls 111 to 114 each have a disk shape and are each disposed such that the side faces of adjacent rolls face each other. The first to fourth rolls 111 to 114 are disposed at equal intervals with respect to the guide member 120, and for example, the first roll 111 has an orientation rotated by 90° with respect to the respective orientations of the second roll 112 and the fourth roll 114 adjacent to the first roll 111. The first roll 111 extends in its plate thickness direction and is rotatable about the axis N₁ passing the center of the first roll 111 as rotational axis. The second roll 112 extends in its plate thickness direction and is rotatable about the axis N₂ passing the center of the second roll 112 as rotational axis. The third roll 113 extends in its plate thickness direction and is rotatable about the axis N₃ passing the center of the third roll 113 as rotational axis. The fourth roll 114 extends in its plate thickness direction and is rotatable about the axis (not illustrated) passing the center of the fourth roll 114 as rotational axis. Note that, hereinafter, the face having the largest area of each roll is referred to as a main face. The main face of the roll includes two main faces facing each other, and the face connecting the two main faces is referred to as a side face.

As the material of each of the first to fourth rolls 111 to 114, steel, copper, a copper alloy, a tungsten-based alloy, a superalloy, or a cemented carbide can be used, and a film is formed on the surface of such a metal material to suppress the reaction between a liquid 30 and the roll. As the film, for example, a ceramic film such as titanium aluminum nitride or chromium nitride, or an amorphous carbon film can be used. Further, as the material of each of the first to fourth rolls 111 to 114, ceramic such as silicon nitride, alumina, or zirconia can also be used in order to further reduce the reaction between the liquid 30 and the roll. Furthermore, the materials of the first to fourth rolls 111 to 114 may be the same as each other, may be different from each other, or may be partially different from other materials.

A first groove 111a shaped like a recess is formed on the side face of the first roll 111 (see FIG. 6). A second groove 112a shaped like a recess is formed on the side face of the second roll 112. A third groove 113a shaped like a recess is formed on the side face of the third roll 113. A fourth groove 114a shaped like a recess is formed on the side face of the fourth roll 114. The first to fourth grooves 111a to 114a are each formed like an arc by cutting away and each face the corresponding groove, thereby forming a space P₁ columnar in shape. Note that FIG. 5 illustrates an example of the space P₁ filled with the core 2 and the skin 3 (or the liquid 30).

As long as the space P₁ can be formed, the first to fourth rolls 111 to 114 may be the same in shape, or may be different in shape (e.g. different in diameter of each roll).

The guide member 120 has a tapered shape, and includes a distal end, a body 121 forming an internal space penetrating the distal end and an end portion opposite the distal end, and a holding portion 122 that is provided on the outer periphery of the body 121 to hold the first to fourth rolls 111 to 114.

Further, an opening portion 123 shaped like a hole is formed on the guide member 120, and the opening portion 123 has an opening decreasing in size from an opening of the body 121 toward the holding portion 122 side. The opening portion 123 has an end on the holding portion 122 side, and the end is in communication with the space P₁ formed by the first to fourth rolls 111 to 114. The liquid 30 with the skin 3 dissolved therein is poured into the opening portion 123 of the guide member 120 by using a container 140 (see FIG. 5). The guide member 120 guides the core 2 and the liquid 30 into the space P₁ formed by the first to fourth rolls 111 to 114. Note that the guide member 120 may be produced by combining a plurality of members, or may be integrally produced as a single member.

The protection pipe 130 has a tubular shape and is partially located inside the guide member 120. The central axis of the tube of the protection pipe 130 passes the center of the space P₁ formed by the first to fourth grooves 111a to 114a. The protection pipe 130 guides the core 2 into the space P₁ formed by the first to fourth rolls 111 to 114.

In the roll casting, both the core 2 and the liquid 30 move from the guide member 120 side to the roll side to pass the space P₁. At this time, the liquid 30 is poured into the guide member 120 and then solidified due to a decrease in temperature during passing the space P₁. The decrease in temperature at this time is caused by cooling resulting from heat removal due to contact with the surfaces of the first to fourth rolls 111 to 114 and the surface of the core 2, and such a formed product (skin 3) as described above is obtained.

At this time, a mixed layer 4 is formed between the core 2 and the skin 3. In addition, in order to prevent the retention of the excess liquid 30 overflowing from the opening portion 123 or the space P₁, a notch or a cut-away part in communication with the space P₁ may be provided. Such a notch or a cut-away part is formed, for example, in part of such a roll as described above.

In the roll casting, the core is not covered with the skin by heating the core or the skin, and the molten skin is attached to the core while being cooled during passing the rolls. Therefore, the influence of heat is small as compared with other known manufacturing methods, and an intermetallic compound is hardly formed. Further, in order to manufacture a clad by wire drawing and rolling, it is necessary to heat a material every wire drawing and rolling, and an intermetallic compound is produced by repeating heat treatment. However, because the roll casting requires only one step of heating (passing of the molten metal), formation of an intermetallic compound can be prevented. Furthermore, in the roll casting, the span from heating to cooling (time of exposure to heat) is relatively shorter, and the effect of preventing formation of an intermetallic compound is obtained.

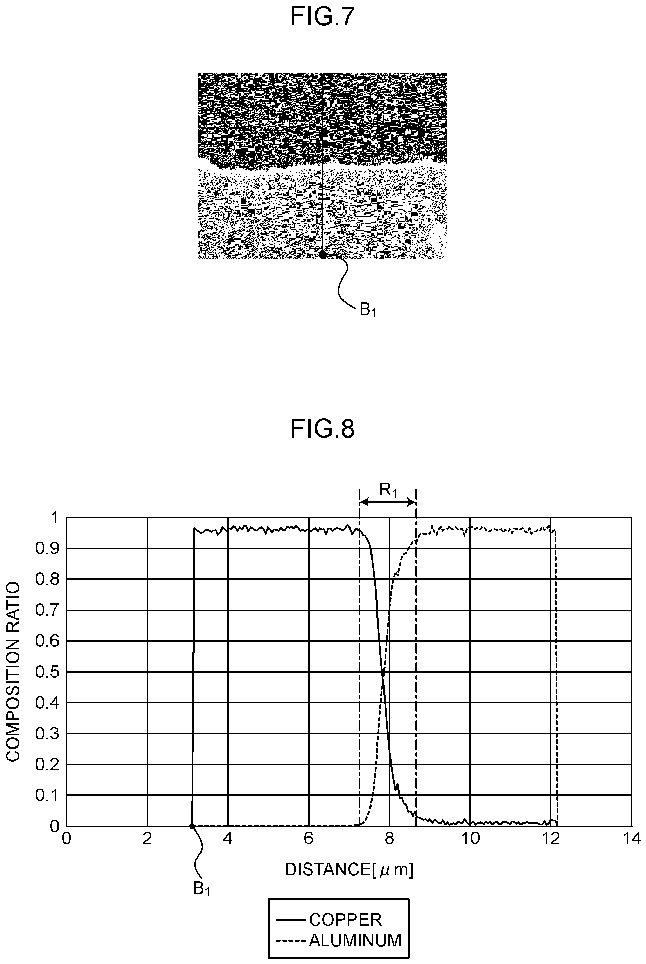

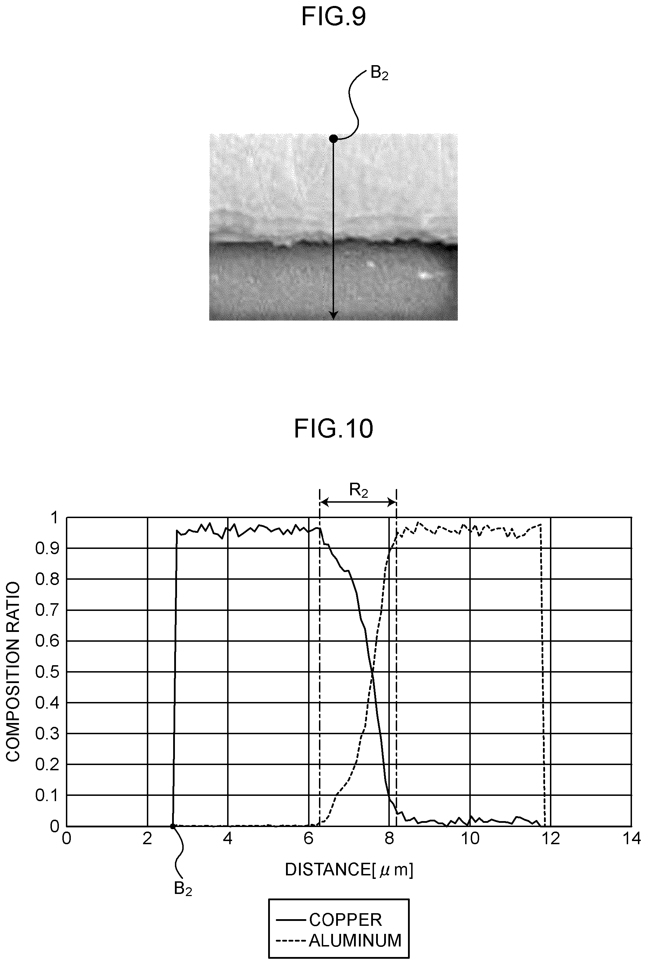

Here, the mixed layer of the clad of the present embodiment and a mixed layer that a conventional clad includes will be described with reference to FIGS. 7 to 10. FIGS. 7 to 10 relate to clads each produced by using copper as a core and aluminum as a skin that has a thickness of 500 to 800 nm. The clad according to the present embodiment is an exemplary clad produced with the manufacturing apparatus 100 illustrated in FIG. 4. On the other hand, the conventional clad is an exemplary clad produced by rolling. FIG. 7 is a secondary electron image including a region of the clad according to the embodiment of the present invention subjected to quantitative analysis with an electron probe micro analyzer (EPMA). FIG. 8 is a graph illustrating a composition ratio in the arrow direction starting from Point B₁ illustrated in FIG. 7. FIG. 9 is a secondary electron image including a region of the conventional clad subjected to quantitative analysis with the electron probe microanalyzer (EPMA). FIG. 10 is a graph illustrating a composition ratio in the arrow direction starting from Point B₂ illustrated in FIG. 9. Each composition ratio indicates the composition ratio between a composition region of copper and a composition region of aluminum with the boundary between copper and aluminum.

In the clad according to the present embodiment, as illustrated in FIG. 8, a region R₁ where the composition ratio varies between copper and aluminum corresponds to a region where an intermetallic compound is formed, namely, a mixed-layer formed region. In this case, the mixed-layer formed region is set by the ratio of a predetermined component. Here, the mixed-layer formed region is set by the composition ratio of copper or aluminum, and for example, the range in which the composition ratio of aluminum is 10% or more and 90% or less is set as the mixed-layer formed region. On the other hand, in the conventional clad, as illustrated in FIG. 10, a region R₂ where the composition ratio varies between copper and aluminum corresponds to a region where an intermetallic compound is formed, that is, a mixed-layer formed region. The comparison between FIG. 8 and FIG. 10 indicates that the clad according to the present embodiment includes the mixed layer thinner in thickness. In this case, the example illustrated in FIG. 8 indicates the mixed layer having a thickness less than about 1.0 µm. On the other hand, the example illustrated in FIG. 10 indicates the mixed layer having a thickness larger than 1.0 µm in value.

According to the embodiment described above, in the clad 1, the thickness (thickness D₁) of the mixed layer 4 formed between the core 2 and the skin 3 is set to 1 µm or less, whereby the extremely small amount of an intermetallic compound or no intermetallic compound is present between the core 2 and the skin 3, and thus a clad including a core and a skin firmly joined is obtained.

Further, in the present embodiment, the core 2 subjected to the heating and the liquid 30 pass the space P₁ formed by the four rolls while the liquid 30 is solidified, resulting in the production of the clad 1. According to the present embodiment, because the liquid skin 3 is brought into contact with the heated core 2, the clad 1 including the core 2 and the skin 3 joined with high joining strength can be produced.

Furthermore, according to the present embodiment, a clad can be produced in a small number of working steps without joining a core and a skin separately produced or repeating annealing and drawing as in a conventional manner.

### (First Modification)

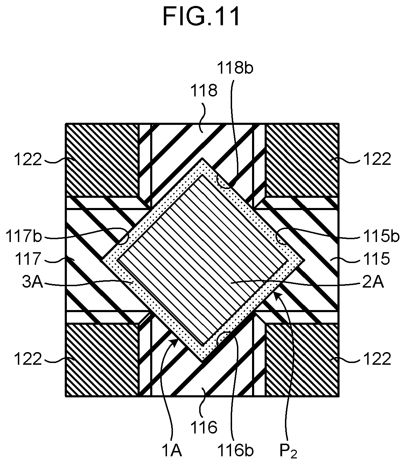

Next, a first modification of the embodiment will be described with reference to FIG. 11. FIG. 11 is a sectional view for explaining the configuration of a main part of a producing apparatus for a clad and the configuration of a wire rod according to the first modification of the embodiment of the present invention. A clad 1A according to the first modification includes a core 2A prismatic in shape, a skin 3A covering the core 2A, and a mixed layer formed between the core 2A and the skin 3A. Further, a groove corresponding to the clad is formed on each roll according to roll casting. Other configurations are the same as those of the above-described embodiment, and thus the description thereof is not given.

In the first modification, a first groove 115b having a V-shape is formed on the side face of a first roll 115. A second groove 116b having a V-shape is formed on the side face of a second roll 116. A third groove 117b having a V-shape is formed on the side face of a third roll 117. A fourth groove 118b having a V-shape is formed on the side face of a fourth roll 118. The first to fourth grooves 115b to 118b are each formed by two inclined faces each extending in the peripheral direction, and the angle formed by the two inclined faces is 90°. The first to fourth grooves 115b to 118b each face the corresponding groove, thereby forming a rectangular (square) space P₂.

In the roll casting, similarly to the embodiment, the core 2A and a liquid 30 both move from the guide member 120 side to the roll side to pass the space P₂. During passing the space P₂, the liquid 30 solidifies on the surface of the core 2A and near the respective surfaces of the first to fourth rolls 115 to 118 to become the skin 3A. At this time, the mixed layer is formed between the core 2A and the skin 3A. As a result, a formed product according to the first modification is produced.

As described above, according to the first modification, in the clad 1A, the thickness of the mixed layer formed between the core 2A and the skin 3A is set to 1 µm or less similarly to the embodiment, whereby the extremely small amount of an intermetallic compound or no intermetallic compound is present between the core 2A and the skin 3A, and thus a clad including a core and a skin firmly joined is obtained.

### (Second Modification)

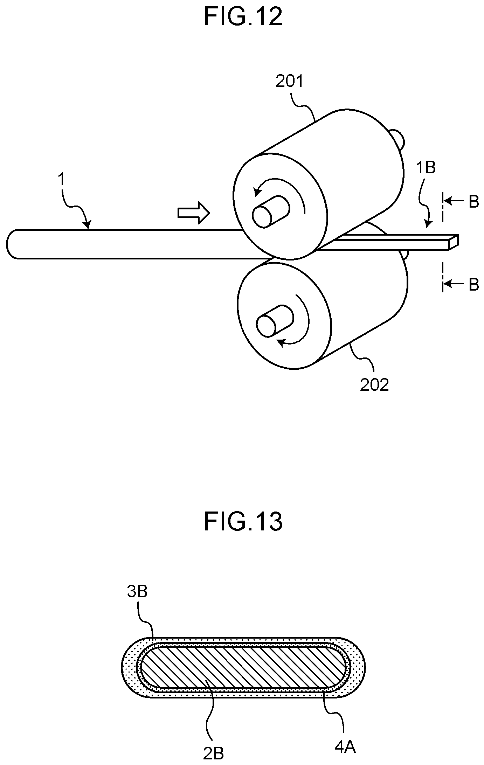

Next, a second modification of the embodiment will be described with reference to FIGS. 12 and 13. In the second modification, the clad 1 produced in the embodiment is processed to obtain a clad different in shape. Specifically, the clad 1 is rolled to obtain a clad shaped like a flat plate.

FIG. 12 is a view for explaining an exemplary processing on the clad according to the second modification of the embodiment of the present invention. FIG. 13 is a sectional view taken along line B-B illustrated in FIG. 12. In the second modification, a first rolling member 201 and a second rolling member 202 each having a columnar shape are rotated, and the clad 1 sequentially fed is processed while being sandwiched to obtain a clad 1B shaped like a flat plate. The clad 1B includes a core 2B shaped like a flat plate and a skin 3B covering the core 2B, and a mixed layer 4A formed between the core 2B and the skin 3B (see FIG. 13). The cross-sectional shape illustrated in FIG. 13 is an exemplary shape in which a portion in non-contact with the first rolling member 201 and the second rolling member 202 is curved like an arc. In addition, for example, the clad 1B may be further subjected to rolling while being rotated about its longitudinal axis.

As described above, for example, the clad 1 produced with the manufacturing apparatus 100 is subjected to the rolling, whereby the clad 1B different in shape from the clad 1 can be obtained. Therefore, a clad in which the extremely small amount of an intermetallic compound or no intermetallic compound is present between the core 2B and the skin 3B can be processed into a desired shape and used.

Note that the processing on the clad is not limited to the above-described rolling, and a known processing method can be adopted.

Note that in the above-described embodiment and the modifications, an example in which the space formed by the rolls is circular or rectangular has been described. However, the space may have a different shape such as an ellipse, a trapezoid, a polygon such as a pentagon or a polygon having six or more angles, a shape in which the corners of the polygon are arcuate, or a star. Further, the number of rolls is not limited to four, and may be two or more. From the viewpoint of preventing generation of burrs on the outer surface of the skin 3 and formation of a gap between the core 2 and the skin 3, it is preferable to have three or more rolls. Furthermore, the shapes of the core and the skin may be different in the cross section. For example, a core having a rectangular cross section may be covered with a skin having an outer edge shaped like a circle. In this case, the core having a rectangular cross section can be manufactured by passing the core through the manufacturing apparatus 100. Still furthermore, when the thickness of the mixed layer 4 satisfies a condition, an apparatus used for manufacturing is not limited to the manufacturing apparatus illustrated in FIG. 4.

As described above, the present invention may include various embodiments and others not described herein, and thus, for example, various design changes can be made without departing from the technical idea specified by the claims.

### Industrial Applicability

As described above, a clad according to the present invention is suitable for firmly joining a core and a skin.

### Reference Signs List

1, 1A, 1B CLAD
2, 2A, 2B CORE
3, 3A, 3B SKIN
4, 4A MIXED LAYER
100 MANUFACTURING APPARATUS
110 ROLL MEMBER
111, 115 FIRST ROLL
111a, 115b FIRST GROOVE
112, 116 SECOND ROLL
112a, 116b SECOND GROOVE
113, 117 THIRD ROLL
113a, 117b THIRD GROOVE
114, 118 FOURTH ROLL
114a, 118b FOURTH GROOVE
120 GUIDE MEMBER
121 BODY
122 HOLDING PORTION
130 PROTECTION PIPE
140 CONTAINER
201 FIRST ROLLING MEMBER
202 SECOND ROLLING MEMBER

## Claims

1. A clad comprising:
a core;
a skin covering the core; and
a mixed layer formed between the core and the skin, the mixed layer containing a mixture of a material of the core and a material of the skin, wherein
the mixed layer has a thickness of 1.0 µm or less.

2. The clad according to claim 1, wherein the mixed layer has a thickness of 0.5 µm or less.

3. The clad according to claim 1, wherein the skin has a thickness thicker than the thickness of the mixed layer.

4. The clad according to claim 2, wherein the skin has a thickness of 0.1 mm or more and 1.0 mm or less.

5. The clad according to claim 1, wherein
the core is made of copper or a copper alloy, and
the skin is made of aluminum or an aluminum alloy.
